(19) Europäisches Patentamt / European Patent Office / Office européen des brevets

(11) **EP 1 947 956 B1**

(12) **FASCICULE DE BREVET EUROPEEN**

(45) Date de publication et mention
de la délivrance du brevet:
**07.09.2011 Bulletin 2011/36**

(51) Int Cl.:
**A23C 9/137** (2006.01)     **A23C 9/13** (2006.01)

(21) Numéro de dépôt: **06819155.0**

(86) Numéro de dépôt international:
**PCT/EP2006/067813**

(22) Date de dépôt: **26.10.2006**

(87) Numéro de publication internationale:
**WO 2007/048824 (03.05.2007 Gazette 2007/18)**

(54) **PRODUIT LAITIER FRAIS MICROFOISONNE ET PROCEDE DE PREPARATION**

MIKROGESCHÄUMTES MILCHFRISCHPRODUKT UND VERFAHREN ZU SEINER HERSTELLUNG

MICROFOAMED FRESH DAIRY PRODUCT AND METHOD FOR MAKING SAME

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **26.10.2005 FR 0510928**

(43) Date de publication de la demande:
**30.07.2008 Bulletin 2008/31**

(73) Titulaire: **COMPAGNIE GERVAIS DANONE
75009 Paris (FR)**

(72) Inventeurs:
• **VASLIN NÉE REIMANN, Sophie
F-92210 Saint Cloud (FR)**
• **VALENTINI, Céline
F-92320 Chatillon (FR)**
• **SCHORSCH, Catherine
F-92100 Boulogne-Billancourt (FR)**
• **CASALINHO, Jérôme
F-75017 Paris (FR)**

(74) Mandataire: **Warcoin, Jacques et al
Cabinet Regimbeau
20, rue de Chazelles
75847 Paris Cedex 17 (FR)**

(56) Documents cités:
EP-A- 1 284 106     EP-A- 1 366 670
WO-A-02/060283     US-A- 4 427 701
US-A- 4 851 239     US-A1- 2005 013 919

EP 1 947 956 B1

**Description**

La présente invention concerne un produit laitier frais microfoisonné stable et son procédé de préparation.

Les systèmes alimentaires foisonnés sont complexes, car constitués de phases dispersées variées dans un milieu continu aqueux et/ou lipidiques telles que les gouttelettes d'huile, les bulles d'air, les cristaux de sucre ou de matière grasse. Afin de garantir la robustesse des formulations d'un point de vue industriel, tout en maintenant une bonne organoleptie de ces mousses, une attention particulière est apportée à la formulation afin de faciliter l'aptitude au foisonnement de la mousse et de garantir sa stabilité au cours du temps.

Le microfoisonnement consiste à injecter une très faible quantité d'air (< 20% en volume, de préférence < 10% en volume, encore mieux = 5% en volume) en vue d'obtenir des bulles de très faible granulométrie, quasi invisibles à l'oeil nu : inférieures à 200 $\mu$m. Ce microfoisonnement n'a pas pour objectif de modifier la texture macroscopique du yaourt, comme pourrait le faire un foisonnement classique, qui consiste à injecter 50 à 100% en volume d'air. Par contre, l'intérêt de cette technologie est de modifier les propriétés sensorielles du yaourt sans que visuellement le consommateur le détecte. Le bénéfice est d'apporter une sorte de signature du yaourt, permettant sa différentiation.

Parmi les ingrédients utilisés dans la fabrication de mousses, le rôle des émulsifiants est déterminant dans les processus de formation de la mousse, alors que celui des agents stabilisants va essentiellement intervenir dans la stabilisation de celle-ci au cours de sa durée de vie. Or, les produits laitiers contenant de très faibles taux de matière grasse forment difficilement des mousses stables.

La gélatine occupe une place de choix parmi les agents stabilisants et les émulsifiants, compte tenu de ses propriétés multifonctionnelles: dans les systèmes aérés, elle joue deux rôles fondamentaux en agissant comme agent de foisonnement, puis en permettant la stabilisation de la texture aérée. Cependant, son utilisation est régulièrement remise en question, pour des questions de sécurité alimentaire (problème de la BSE) ou religieuses. Or, son remplacement n'est pas simple.

Le choix de l'émulsifiant est important car il conditionne l'aptitude au foisonnement de la base laitière. La plupart des émulsifiants habituels tels que les mono-diglycérides d'acides gras pourraient convenir, mais ont l'inconvénient d'apporter de la matière grasse au produit fini, ce qui est incompatible avec des yaourts allégés en matière grasse.

De façon surprenante, les inventeurs ont découverts que les protéines sériques « dégraissées », dépourvues de matières grasses, et natives (c'est à dire non dénaturées comme le sont les sous-produits de l'industrie fromagère) telles qu'obtenues par un procédé de microfiltration ou d'échanges par chromatographie d'ions sont d'excellents candidats pour le microfoisonnement de produits laitiers, en particulier acides, fermentés ou non, et avantageusement allégés.

Il est certes connu selon les demandes de brevet WO02/060283, WO03/053174 et EP1284106 de foisonner des produits laitiers avec des protéines peu ou pas dénaturées. Toutefois, dans le cas des demandes de brevet WO02/060283 et WO03/053174, les microbulles sont fabriquées et séchées avant leur incorporation dans un produit laitier. En outre, les inventeurs de la présente demande, se sont aperçus de façon surprenante que dans le cas où les protéines sériques sont utilisées en tant qu'agent foisonnant, il est nécessaire d'utiliser également un agent stabilisant pour garder un produit microfoisonné stable et éviter ainsi une augmentation de la taille des bulles. Après de multiples recherches, les inventeurs ont découvert que seule la cellulose microcristalline (MCC) permettait d'obtenir la stabilisation désirée tout en restant compatible avec les protéines utilisées et simple à mettre en oeuvre. En effet, la MCC a comme particularité d'être insoluble, sa fonctionnalisation étant assurée par une activation c'est à dire un fort cisaillement. La structure induite par la MCC permet la stabilisation des microbulles jusqu'à la date limite de consommation (DLC) du produit en évitant tout phénomène de déstabilisation tels que mûrissement d'Oswald ou coalescence

La présente invention concerne donc un produit laitier frais microfoisonné contenant des protéines sériques solubles dégraissées natives et de la cellulose microcristalline, le taux de foisonnement étant inférieur à 20%, le diamètre moyen des bulles étant inférieur à 200 $\mu$m et le produit laitier frais microfoisonné étant stable pendant au moins une durée comprise entre 12 jours et 6 semaines, à une température comprise entre 1 et 10°C.

Au sens de la présente invention, on entend par le terme « microfoisonnement » l'injection d'une très faible quantité de gaz (< 20% en volume, de préférence < 10% en volume, avantageusement = 5% en volume) en vue d'obtenir après foisonnement des bulles de très faible granulométrie, quasi invisibles à l'oeil nu : le diamètre moyen des bulles étant inférieur à 200 $\mu$m. Avantageusement, le gaz injecté est traditionnellement choisi parmi l'air et l'azote, mais peut contenir aussi du protoxyde d'$N_2$ ($N_2O$) ou du $CO_2$.

Au sens de la présente invention, on entend par le terme « produit microfoisonné », le produit obtenu suite au microfoisonnement selon la présente invention.

Ainsi, le taux de foisonnement d'un produit microfoisonné selon la présente invention est < 20%, de préférence < 10%, avantageusement = 5%.

Le taux de foisonnement est calculé de la façon suivante:

$$\text{Taux de foisonnement} = \frac{(\text{Masse pot produit non foisonné} - \text{Masse pot produit foisonné}) \times 100}{\text{Masse pot produit non foisonné}}$$

Le diamètre moyen d'une bulle $D_{3,2}$ répond à l'équation suivante :

$$D_{3,2} = \text{somme } (i = 1 \text{ à } n) \ d_i{}^3 \ / \ \text{somme } (i = 1 \text{ à } n) \ d_i{}^2$$

Avantageusement le diamètre moyen des bulles est compris entre 50 et 200 $\mu$m, de façon avantageuse compris entre 90 et 150 $\mu$m, de façon encore plus avantageuse compris entre 80 et 100 $\mu$m.

Au sens de la présente invention, on entend par le terme de « native », toute protéine non ou très faiblement dénaturées (le taux de dénaturation d'une protéine peut être calculée par la quantification du % de protéine sérique non solubilisé à son pH isoélectrique). Il ne s'agit donc pas de sous-produits de l'industrie fromagère. En outre le traitement thermique qui leur est appliqué si nécessaire doit être réalisé à une température ne provoquant pas la dénaturation de ces protéines et pendant un temps suffisant mais limité. Avantageusement les protéines sériques natives solubles dégraissées sont obtenues par un procédé de déminéralisation et/ou d'ultrafiltration et/ou microfiltration du lait dénué de chaleur ou par un traitement chimique ou enzymatique du lait. Ces procédés permettent de préserver la qualité naturelle et la bioactivité des protéines sériques obtenues. Avantageusement, le taux de dénaturation des protéines sériques est inférieur à 5 %, de façon avantageuse, inférieur à 2 %, de façon encore plus avantageuse, il est d'environ 1 %. Avantageusement les protéines sériques selon la présente invention contiennent au moins 50% en poids de béta-lactoglobuline, de façon avantageuse, 57% en poids et avantageusement moins de 20% en poids d'$\alpha$-lactalbumine, avantageusement 18% en poids. Au sens de la présente invention on entend par le terme de « dégraissé », toute protéine contenant moins 1% en poids de matière grasse, avantageusement moins de 0,5% en poids, de façon avantageuse, environ 0,4% en poids.

Avantageusement, ces protéines sériques natives solubles dégraissées sont issues d'isolats de protéines sériques natives solubles dégraissées dont la teneur en protéines sériques solubles natives dégraissées est avantageusement supérieure à 80% en poids, de façon avantageuse supérieure à 90% en poids. Avantageusement ces isolats contiennent peu de lactose, avantageusement moins de 10% en poids, de façon avantageuse, moins de 4% en poids, de façon encore plus avantageuse environ 3% en poids. Avantageusement les isolats de protéines sériques natives solubles dégraissées sont le Prolacta 90 commercialisé par la société Lactalis, l'Ultra whey-99 commercialisé par la société Volactive ou le Promilk 852 FB commercialisé par la société Ingredia.

De façon avantageuse, le produit laitier frais microfoisonné selon la présente invention contient de 0,08 à 3% en poids de protéines sériques solubles natives dégraissées par rapport au poids total du produit laitier, avantageusement de 0,09 à 3 % en poids de protéines sériques solubles natives dégraissées par rapport au poids total du produit laitier, de façon encore plus avantageuse entre 0,1 % et 3 % en poids de protéines sériques solubles natives dégraissées par rapport au poids total du produit laitier.

Tout produit laitier contient des protéines sériques. Toutefois, elles sont souvent pour une bonne partie dénaturées suite à la pasteurisation, stérilisation et/ou fermentation du produit laitier. Or, cette dénaturation diminue le pouvoir de foisonnement de ces protéines. Enfin, les quantités présentes ne sont pas suffisantes pour foisonner le produit laitier. Il convient donc d'en rajouter.

Dans un mode de réalisation particulier la cellulose microcristalline est stabilisée, avantageusement par un colloïde protecteur. Avantageusement le colloïde protecteur n'est pas du carboxyméthylcellulose. De façon avantageuse le colloïde protecteur est une pectine. En particulier il s'agit de la cellulose microcristalline stabilisée par une pectine Avicel (référence commerciale Avicel XP 3602) commercialisée par la société FMC.

De façon avantageuse, le produit laitier frais microfoisonné selon la présente invention contient de 0,3 à 5% en poids de cellulose microcristalline stabilisée par rapport au poids total du produit laitier, avantageusement entre 0,3 et 3% en poids de cellulose microcristalline stabilisée par rapport au poids total du produit laitier.

Au sens de la présente invention, on entend par « produit laitier» ou « base laitière », tout produit laitier ou base laitière acide ou neutre et donc tout produit laitier ou base laitière fermentée ou acidifiée via des ingrédients (avantageusement par de l'acide lactique, citrique ou phosphorique) de pH acide (avantageusement son pH est inférieur à 4,8, de façon avantageuse il est compris entre 3 et 4,8) ou neutre (avantageusement son pH est compris entre 4,8 et 7,3, de façon avantageuse entre 5,5 et 6,8). En particulier il peut s'agir d'un fromage frais ou d'un produit fermenté contenant des ferments vivants (par exemple de la crème acide, du kéfir ou autres) et notamment d'un yoghourt ou de spécialités laitières fermentées assimilées (fermentées par des bactéries lactiques, comme le bifidus actif ou *L. casei*). Dans le cadre de la présente invention on préférera les produits laitiers ou bases laitières acides, avantageusement fermentés, de façon avantageuse du type yoghourt. Avantageusement il s'agit d'un yoghourt de type brassé. De façon avantageuse, le produit ou la base est fermenté par l'addition de ferments vivants tels que par exemple du *Lactobacillus*

*bulgaricus*, du *Streptococcus thermophilus* et/ou du *Lactobacillus acidophilus* et/ou *bifidus*.

Avantageusement, le lait utilisé dans le produit laitier ou la base laitière est du lait de vache. Toutefois, d'autres laits peuvent être utilisés en substitution totale ou partielle du lait de vache, tels que par exemple du lait de chèvre, de brebis, de bufflonne ou de jument, ou de façon moins avantageuse des laits d'origine végétal tels que le lait de soja, de coco ou d'avoine.

La base laitière ou le produit laitier acide ou neutre pasteurisée ou stérilisée et éventuellement fermentée est obtenue selon des méthodes bien connues de l'homme du métier. En particulier le procédé pour obtenir un produit laitier ou une base laitière acide pasteurisée fermentée comprend les étapes successives suivantes:

- homogénéisation de la base laitière ou du produit laitier,
- pasteurisation de la base laitière ou du produit laitier,
- refroidissement de la base laitière ou du produit laitier,
- ensemencement,
- fermentation jusqu'à l'acidité désirée.

Brièvement, le procédé commence avec du lait cru qui peut contenir également une combinaison de lait entier, lait écrémé, lait condensé, lait sec (extrait sec dégraissé de lait ou équivalent), lactosérum de catégorie A, crème et/ou d'autres ingrédients de fraction du lait tels que par exemple le babeurre, le lactosérum, le lactose ou le lactosérum modifié par enlèvement partiel ou total du lactose et/ou des minéraux ou d'autres ingrédients laitiers pour augmenter la teneur en solide dégraissé, qui sont mélangés pour fournir les teneur en matière grasse et en solide désirées. Bien que non préférée dans le cadre de la présente invention, le produit laitier ou la base laitière peut contenir un composant laitier de remplissage, c'est à dire un ingrédient laitier dont une portion est constituée par un ingrédient non laitier, tel que par exemple une huile ou du lait de soja.

De façon avantageuse, le produit laitier frais microfoisonné selon la présente invention peut ou non contenir de la matière grasse soit de 0 à 15 % en poids, avantageusement de 0 à 5 % en poids de matières grasses par rapport au poids total du produit laitier.

Avantageusement le produit laitier frais microfoisonné selon la présente invention ne contient pas de gélatine.

Dans un mode particulier de réalisation de l'invention, le produit laitier frais microfoisonné selon la présente invention contient d'autres ingrédients, avantageusement choisis parmi les sirops sucrés, la crème, les préparations de fruits, tels que la pulpe de fruits, la purée de fruits ou les morceaux de fruits, et le cacao.

Les produits laitiers frais microfoisonnés selon la présente invention sont les qualités organoleptique de fuyant, léger et nappant.

De plus, le microfoisonnement du produit laitier selon la présente invention fait ressortir le goût sucré de ce produit laitier. Ainsi avantageusement le produit laitier frais microfoisonné selon la présente invention peuvent contenir des teneurs inférieures en sucre par rapport aux produits laitiers non microfoisonnés, avantageusement des teneurs en sucres inférieures de 1 à 10 % en poids par rapport au poids total du produit laitier non microfoisonné.

En outre les produits laitiers acides microfoisonnés selon la présente invention ont un goût moins acide et moins astringent que les produits non microfoisonnés, les saveurs sucrées et de caramel blond ressortant plus.

De plus, dans le cas où les produits laitier frais microfoisonnés selon la présente contiennent des préparations de fruits, les goûts estérifiés du fruit et d'acétaldéhydes ont diminués. Enfin, si les préparations de fruits contiennent de gros morceaux de fruit, ces derniers et en particulier leur fermeté ressortent plus sur la base laitière par rapport aux produits laitiers frais non microfoisonnés.

La présente invention concerne en outre un procédé de préparation d'un produit laitier frais microfoisonné selon la présente invention, le procédé comprenant les étapes successives suivantes:

a) Formulation d'une base laitière comprenant les protéines sériques solubles dégraissées natives, avantageusement sous forme d'isolats et la cellulose microcristalline ;
b) Microfoisonnement de cette base laitière, et
c) Récupération du produit laitier frais microfoisonné.

Un foisonneur statique peut être utilisée lors de l'étape (b) du procédé selon la présente invention. Son inconvénient est la plus grande déstructuration de la base laitière lors de la mise en oeuvre de cette étape en utilisant un tel foisonneur. De plus les bulles obtenues à l'aide ce type de foisonneur sont certes de plus petites tailles mais sont moins stables.

Ainsi, avantageusement l'étape (b) est réalisée à l'aide d'un foisonneur dynamique, par exemple du type Mondomix.

Dans un premier mode de réalisation avantageux, l'étape (a) du procédé selon la présente invention consiste en le mélange d'une base laitière avec une solution aqueuse foisonnante non foisonnée contenant les protéines sériques solubles dégraissées natives et la cellulose microcristalline.

Avantageusement lors de cette étape (a) 5 à 15 % en poids de solution aqueuse foisonnante est ajouté à 95 à 85 % en poids de base laitière, avantageusement 10% en poids de solution aqueuse foisonnante est ajouté à 90 % en poids de base laitière.

Dans ce premier mode, avantageusement, le produit laitier frais microfoisonné obtenu à l'étape (c) comprend entre 0,3 et 3% en poids de cellulose microcristalline par rapport au poids total du produit laitier.

De façon avantageuse, dans ce premier mode, la solution aqueuse foisonnante contient des ingrédients choisis parmi les sirops sucrés, la crème, les préparations de fruits, tels que la pulpe de fruits, la purée de fruits ou les morceaux de fruits, et le cacao. Toutefois, il est également possible que les autres ingrédients choisis parmi les sirops sucrés, la crème, les préparations de fruits, tels que la pulpe de fruits, la purée de fruits ou les morceaux de fruits, et le cacao ne soient pas présents dans la solution aqueuse foisonnante et soient ajoutés et mélangés au produit laitier microfoisonné selon la présente invention par l'intermédiaire d'une étape supplémentaire (d).

De façon avantageuse dans ce premier mode de réalisation du procédé selon la présente invention, ce procédé comprend une étape préalable ($\alpha$) de préparation de la solution aqueuse foisonnante par mélange, avantageusement sous forte agitation, des ingrédients dans de l'eau sans incorporation d'air, suivi d'une acidification, avantageusement à l'aide d'acide citrique ou d'acide malique et avantageusement jusqu'à un pH compris entre 4 et 4,8, d'un traitement thermique avantageusement à une température de 60 à 72°C pendant 10 à 1 min, et d'une homogénéisation du mélange obtenu, avantageusement à une pression comprise entre $3.10^6$ Pa et $10.10^6$ Pa.

De façon avantageuse, le mélange des ingrédients dans l'eau est suivi d'une étape d'hydratation, avantageusement pendant entre 30 minutes et 1 heure, avant l'étape d'acidification.

Avantageusement la solution aqueuse foisonnante contient entre 5 et 10% en poids de cellulose microcristalline, de façon avantageuse 6% en poids par rapport au poids total de la solution aqueuse foisonnante.

Avantageusement la solution aqueuse foisonnante contient entre 2,4 et 10% en poids de protéines sériques natives solubles dégraissées, de façon avantageuse 5,5% en poids en protéines sériques par rapport au poids total de la solution aqueuse foisonnante. Avantageusement, les protéines sériques se trouvent sous la forme d'isolats. Avantageusement dans le cadre de ce premier mode, la base laitière est fermentée et la fermentation a lieu avant l'étape (a) de mélange entre la base laitière et la solution aqueuse foisonnante.

De façon avantageuse, les étapes (a) de mélange entre la base laitière et la solution aqueuse foisonnante et (b) de microfoisonnement sont réalisées simultanément en une seule étape.

L'avantage de ce premier mode de réalisation est de ne pas perdre l'appellation yaourt.

Dans un deuxième mode de réalisation l'étape (a) du procédé selon la présente invention consiste en l'ajout des protéines sériques dégraissées natives solubles sous forme de poudre, avantageusement sous forme de poudre d'isolats et de la cellulose microcristalline sous forme de poudre et le mélange avec la base laitière. Avantageusement les protéines sériques natives solubles et la cellulose microcristalline sont ajoutés simultanément ou séparément avant traitement thermique et fermentation sous forme de poudre dans la base laitière.

De façon avantageuse la base laitière est fermentée et la cellulose microcristalline est ajoutée avant l'étape de fermentation de la base laitière, les protéines sériques natives solubles dégraissées étant ajoutées après l'étape de fermentation.

Ainsi, avantageusement la fermentation a lieu avant l'introduction des protéines sériques solubles dégraissées natives lors de l'étape de formulation (a).

L'avantage de ce deuxième mode de réalisation est que le yaourt n'est pas dilué par l'ajout d'une préparation aqueuse mais que la quantité de cellulose microcristalline présente dans le produit laitier microfoisonné obtenu sera plus importante que dans le cas du premier mode de réalisation : (environ 2-3% en poids par rapport à environ 0,6% en poids).

De façon avantageuse, d'autres ingrédients choisis parmi les sirops sucrés, la crème, les préparations de fruits, tels que la pulpe de fruits, la purée de fruits ou les morceaux de fruits, et le cacao sont ajoutés et mélangés au produit laitier microfoisonné selon la présente invention par l'intermédiaire d'une étape supplémentaire (d). Avantageusement l'étape supplémentaire (d) est réalisée à l'aide d'un mélangeur dynamique de type Dosys.

Dans un troisième mode de réalisation de l'invention, le procédé de préparation d'un produit laitier frais microfoisonné selon la présente invention comprend les étapes successives suivantes de

(A) préparation d'une solution aqueuse foisonnante contenant les protéines sériques solubles dégraissées natives, avantageusement sous forme d'isolats et la cellulose microcristalline, de l'eau et une purée de fruits ;
(B) microfoisonnement de cette préparation ;
(C) mélange de la préparation aqueuse microfoisonnée à une base laitière et
(D) récupération du produit laitier frais microfoisonné.

Avantageusement la purée de fruits de l'étape (A) ne contient pas de morceaux de fruits. Avantageusement lors de cette étape (C) 5 à 15 % en poids de solution aqueuse foisonnante est ajouté à 95 à 85 % en poids de base laitière.

Ce troisième mode de réalisation est plus simple à réaliser que les deux premiers.

Le procédé selon la présente invention peut comprendre une étape supplémentaire (e) de conditionnement du produit laitier frais microfoisonné obtenu suite aux étapes (c), (d) ou (D).

La maîtrise du procédé de microfoisonnement passe par une bonne connaissance des paramètres du procédé, tels que la pression d'homogénéisation, la température de foisonnement en lien avec des paramètres formulation, tels que par exemple la concentration en protéines sériques natives solubles dégraissées et la nature la cellulose microcristalline.

Les exemples suivants sont donnés à titre indicatif non limitatif

**Exemple 1 : yaourt nature à 0,07% en poids de matière grasse microfoisonné selon la présente invention**

Le procédé qui a été choisi consiste à mélanger 10% en poids d'un sirop foisonnant contenant l'émulsifiant et le stabilisant avec 90% en poids de la masse blanche, puis à foisonner l'ensemble des deux masses grâce à un foisonneur dynamique (Mondomix) avant de conditionner le produit microfoisonné ainsi obtenu. Il s'agit donc du procédé selon le premier mode de réalisation de la présente invention

Les essais sont réalisés sur pilote 1101/h :

Le sirop est obtenu par mélange sous forte agitation de la protéine et de la MCC. Il est nécessaire d'incorporer doucement les poudres sans incorporer d'air (la MCC favorise la formation de bulles et leur maintien). Il est également nécessaire d'utiliser une cuve de poudrage munie d'une pâle défloculeuse pour s'assurer d'une dispersion homogène dans le mélange initial. Les"bâtonnets" de MCC sont ainsi partiellement activés et mis en suspension. Il faut donc un cisaillement modéré.

L'hydratation des poudres est réalisée pendant 1 heure. Au bout de 45 minutes d'hydratation, l'ajustement du pH à 4,6 est réalisé par acidification avec une solution d'acide citrique à 50%. Pour une cuve de 100L il faut prévoir 1 à 2L de solution d'acide. Le sirop est ensuite passé au travers d'une plateforme à échangeur à plaque (traitement thermique = 72°C pendant 1 min). Le procédé comprend ensuite l'homogénéisation du sirop à 50 bars. Il est également possible de réaliser le traitement thermique de type batch par ex dans une cuve à double enveloppe permettant de réaliser le traitement thermique requis et équipé d'un disperseur suffisamment puissant (de type Silverson, permettant une agitation de l'ordre de 2000 tour/min pendant 30 min).

C'est l'étape d'homogénéisation qui va permettre d'exprimer au mieux la MCC pour un traitement thermique sur plate forme. Il faut donc un cisaillement important. Eventuellement le traitement thermique peut être réalisé en batch, l'homogénéisateur peut alors être remplacé par un disperseur.

La composition du sirop est indiquée dans le tableau 1 suivant :

| Matières premières | Taux incorporation en poids |
|---|---|
| MCC stabilisée par de la pectine Avicel X P 3602 | 6,00% |
| Isolats de protéines sériques natives solubles dégraissées (Prolacta 90) | 5,56 % |
| Eau déchlorée | 89,44 % |
| Total | 100,00 % |
| Extrait sec (% en poids) | 9,50 |
| Protéines laitières (% en poids) | 5,00 |

Le sirop est ajouté à la masse blanche à température ambiante.

La masse blanche consiste en un yaourt traditionnel à 0,07% en poids de matière grasse nature. Il contient :

- du lait écrémé (0% de matière grasse)
- de la poudre de lait écrémé (PLE)
- des ferments.

Au final, le yoghourt contient environ 0,07% de matière grasse et 4,9% de protéines (le lait en contenant 3,5% et la PLE 35%).

La masse blanche est à une température de 10°C.

Le foisonnement dynamique est réalisé avec un mini Mondomix et a les caractéristiques suivantes (essai à l'échelle pilote):

débit produit = 44L/H ;
vitesse tête = 240 tour/min ;
Taux foisonnement = 1,053 (5% d'air en volume) ;

Récupération sous pression du produit laitier frais microfoisonné (0,04.10$^6$ Pa).

Le produit microfoisonné obtenu est caractérisé par microscopie optique et analyse d'images et par des tests sensoriels.

La microscopie optique est un moyen facile d'observer si les MCC sont bien mises en suspension.

Le micro foisonnement est stable pendant au moins 28 jours. Il n'y a pas d'augmentation sensible de la taille des bulles.

Un test sensoriel a été réalisé sur le produit microfoisonné obtenu en le comparant au produit standard, c'est à dire non microfoisonné.

En particulier, il a été trouvé que le microfoisonnement agit sur les aspects sensoriels du produit en faisant ressortir les notes sucrées. En effet le goût sucré ressort d'avantage sur le produit microfoisonné par rapport à un produit non microfoisonné.

Par ailleurs, le produit microfoisonné est significativement :

- plus filant que le produit non microfoisonné ;
- moins collant ;
- plus mousseux.

**Exemple 2 : yaourt nature à 0,07% en poids de matière grasse microfoisonné selon la présente invention contenant une préparation de fruits**

Le produit obtenu selon l'exemple 1, sortie foisonneur doit être conservé dans un cuve sous une pression de 0,4 bars comme cela est classiquement pratiqué sur les produits foisonnés. Le mélange des fruits est ensuite effectué de façon classique sur un Dosys par exemple.

Un test sensoriel a été réalisé sur le produit microfoisonné en le comparant au produit standard, c'est à dire non microfoisonné.

Ainsi, du point de vu arômatique :

Le produit microfoisonné obtenu est moins acide et moins astringent que le produit standard. Le micro foisonnement permet de faire ressortir la saveur sucrée ainsi que caramel blond pour les arômes fruits. Les MCC ont également la propriété de diminuer les goûts estérifiés du fruit et d'acétaldéhyde. Par contre les notes de lactosérum sont diminuées aussi.

**Exemple 3 : yaourt nature à 0,9% en poids de matière grasse microfoisonné selon la présente invention**

Le procédé utilisé est le même que celui de l'exemple 1. Les compositions sont également identiques, à l'exception de celle de la masse blanche.

En effet cette masse blanche consiste en un yaourt traditionnel à 0,9% en poids de matière grasse nature. Il contient :

- Du lait écrémé à 0,5g/L
- De la Crème
- De la PLE (poudre de lait écrémée)
- Un concentré de protéines du lait (Hyprotal 45)
- De l'amidon de riz pour la texture en pot et en bouche.

Cette masse contient donc 0,9% de matière grasse et un teneur en protéine de 5,3%. Les résultats obtenus sont identiques à ceux de l'exemple 1.

**Revendications**

1. Produit laitier frais microfoisonné contenant des protéines sériques solubles dégraissées natives et de la cellulose microcristalline, le taux de foisonnement étant inférieur à 20%, le diamètre moyen des bulles étant inférieur à 200 μm et le produit laitier frais microfoisonné étant stable pendant au moins une durée comprise entre 12 jours et 6 semaines, à une température comprise entre 1 et 10°C.

**2.** Produit laitier frais microfoisonné selon la revendication 1 **caractérisé en ce que** la cellulose microcristalline est stabilisée, avantageusement par une pectine.

**3.** Produit laitier frais microfoisonné selon l'une quelconque des revendications 1 ou 2, **caractérisé en ce que** le produit laitier est un produit laitier acide, avantageusement fermenté, de façon avantageuse un yaourt.

**4.** Produit laitier frais microfoisonné selon l'une quelconque des revendications précédentes, **caractérisé en ce qu'**il contient de 0,08 à 3% en poids de protéines sériques solubles natives dégraissées par rapport au poids total du produit laitier.

**5.** Produit laitier frais microfoisonné selon l'une quelconque des revendications précédentes, **caractérisé en ce qu'**il contient de 0,3 à 5% en poids de cellulose microcristalline par rapport au poids total du produit laitier.

**6.** Produit laitier frais microfoisonné selon l'une quelconque des revendications précédentes, **caractérisé en ce qu'**il ne contient pas de gélatine.

**7.** Produit laitier frais microfoisonné selon l'une quelconque des revendications précédentes, **caractérisé en ce qu'**il contient d'autres ingrédients, avantageusement choisis parmi les sirops sucrés, la crème, les préparations de fruits, avantageusement choisis parmi la pulpe de fruits et les morceaux de fruits, et le cacao.

**8.** Produit laitier frais microfoisonné selon l'une quelconque des revendications précédentes, **caractérisé en ce que** le produit laitier contient de 0 à 15 % en poids, avantageusement de 0 à 5 % en poids de matières grasses par rapport au poids total du produit laitier.

**9.** Procédé de préparation d'un produit laitier frais microfoisonné selon l'une quelconque des revendications 1 à 8, **caractérisé en ce qu'**il comprend les étapes successives suivantes :

a) Formulation d'une base laitière comprenant les protéines sériques solubles dégraissées natives et la cellulose microcristalline ;
b) Microfoisonnement de cette base laitière, avantageusement à l'aide d'un foisonneur dynamique et
c) Récupération du produit laitier frais microfoisonné.

**10.** Procédé de préparation d'un produit laitier frais microfoisonné selon la revendication 9, **caractérisé en ce que** l'étape (a) consiste en le mélange d'une base laitière avec une solution aqueuse foisonnante non foisonnée contenant les protéines sériques solubles dégraissées natives, avantageusement sous forme d'isolats, et la cellulose microcristalline.

**11.** Procédé selon la revendication 10, **caractérisé en ce que** le produit laitier frais microfoisonné obtenu à l'étape (c) comprend entre 0,3 et 3% en poids de cellulose microcristalline par rapport au poids total du produit laitier.

**12.** Procédé selon l'une quelconque des revendications 10 ou 11, **caractérisé en ce que** la solution aqueuse foisonnante contient des ingrédients choisis parmi les sirops sucrés, la crème, les préparations de fruits ou le cacao.

**13.** Procédé selon l'une quelconque des revendications 9 à 11, **caractérisé en ce qu'**il comprend l'étape supplémentaire (d) d'ajout et de mélange dans le produit laitier frais microfoisonné d'un ingrédient choisi parmi les sirops sucrés, la crème, les préparations de fruits ou le cacao.

**14.** Procédé selon l'une quelconque des revendications 9 à 13, **caractérisé en ce qu'**il comprend une étape supplémentaire (e) de conditionnement du produit laitier frais microfoisonné.

**15.** Procédé selon l'une quelconque des revendications 10 à 14, **caractérisé en ce qu'**il comprend une étape préalable (α) de préparation de la solution aqueuse foisonnante par mélange des ingrédients dans de l'eau sans incorporation d'air, suivi d'une acidification, avantageusement à l'aide d'acide citrique, d'un traitement thermique, et d'une homogénéisation du mélange obtenu.

**16.** Procédé selon l'une quelconque des revendications 9 à 15, **caractérisé en ce que** la base laitière est fermentée et **en ce que** la fermentation a lieu avant l'étape de mélange entre la base laitière et la solution aqueuse foisonnante ou avant l'introduction des protéines sériques solubles dégraissées natives lors de l'étape de formulation (a).

**Claims**

1. A microfoamed fresh dairy product containing native defatted soluble serum proteins and microcrystalline cellulose, wherein the overrun is less than 20%, the mean diameter of bubbles is less than 200 $\mu$m and the microfoamed fresh dairy product is stable for at least a period between 12 days and 6 weeks at a temperature between 1°C and 10°C.

2. The microfoamed fresh dairy product according to claim 1, **characterized in that** the microcrystalline cellulose is stabilized, advantageously by a pectin.

3. The microfoamed fresh dairy product according to either claim 1 or claim 2, **characterized in that** the dairy product is an acid dairy product, advantageously fermented, advantageously a yogurt.

4. The microfoamed fresh dairy product according to any one of the preceding claims, **characterized in that** it contains from 0.08% to 3% by weight native defatted soluble serum proteins in relation to the total weight of the dairy product.

5. The microfoamed fresh dairy product according to any one of the preceding claims, **characterized in that** it contains from 0.3% to 5% by weight microcrystalline cellulose in relation to the total weight of the dairy product.

6. The microfoamed fresh dairy product according to any one of the preceding claims, **characterized in that** it does not contain gelatin.

7. The microfoamed fresh dairy product according to any one of the preceding claims, **characterized in that** it contains other ingredients, advantageously selected from sugar syrups, cream, fruit preparations advantageously selected from fruit pulp and fruit pieces, and cocoa.

8. The microfoamed fresh dairy product according to any one of the preceding claims, **characterized in that** the dairy product contains from 0% to 15% fat by weight, advantageously from 0% to 5% fat by weight in relation to the total weight of the dairy product.

9. A method for preparing the microfoamed fresh dairy product according to any one of claims 1 to 8, **characterized in that** it comprises the following successive steps:

   a) formulation of a dairy base comprising native defatted soluble serum proteins and microcrystalline cellulose,
   b) microfoaming of said dairy base, advantageously using a dynamic foaming device, and
   c) recovery of the microfoamed fresh dairy product.

10. The method for preparing a microfoamed fresh dairy product according to claim 9, **characterized in that** step (a) consists of mixing a dairy base with a non-foamed foaming aqueous solution containing native defatted soluble serum proteins, advantageously in the form of isolates, and microcrystalline cellulose.

11. The method according to claim 10, **characterized in that** the microfoamed fresh dairy product obtained in step (c) comprises between 0.3% and 3% by weight microcrystalline cellulose in relation to the total weight of the dairy product.

12. The method according to either claim 10 or claim 11, **characterized in that** the foaming aqueous solution contains ingredients selected from sugar syrups, cream, fruit preparations, and cocoa.

13. The method according to any one of claims 9 to 11, **characterized in that** it comprises the additional step (d) of the adding and mixing in the microfoamed fresh dairy product of an ingredient selected from sugar syrups, cream, fruit preparations, and cocoa.

14. The method according to any one of claims 9 to 13, **characterized in that** it comprises an additional step (e) of packaging of the microfoamed fresh dairy product.

15. The method according to any one of claims 10 to 14, **characterized in that** it comprises a preliminary step ($\alpha$) of preparation of the foaming aqueous solution by mixing the ingredients in water without incorporating air, followed by acidification, advantageously using citric acid, thermal treatment, and homogenization of the mixture obtained.

16. The method according to any one of claims 9 to 15, **characterized in that** the dairy base is fermented and that fermentation takes place before the step of mixing between the dairy base and the foaming aqueous solution or before the introduction of native defatted soluble serum proteins during the formulation step (a).

**Patentansprüche**

1. Mikrogeschäumtes Milchfrischprodukt umfassend native entfettete lösliche Serumproteine und mikrokristalline Cellulose, wobei der Schäumungsgrad niedriger als 20% ist, der mittlere Durchmesser der Bläschen niedriger als 200 μm ist und das mikrogeschäumte Milchfrischprodukt mindestens während eines Zeitraums von 12 Tagen bis 6 Wochen bei einer Temperatur zwischen 1 und 10°C stabil ist.

2. Mikrogeschäumtes Milchfrischprodukt gemäß Anspruch 1, **dadurch gekennzeichnet, dass** die mikrokristalline Cellulose stabilisiert ist, bevorzugt mit einem Pektin.

3. Mikrogeschäumtes Milchfrischprodukt gemäß Anspruch 1 oder 2, **dadurch gekennzeichnet, dass** das Milchprodukt ein saures Milchprodukt ist, bevorzugt fermentiert, vorzugsweise ein Joghurt.

4. Mikrogeschäumtes Milchfrischprodukt gemäß einem der vorangehenden Ansprüche, **dadurch gekennzeichnet, dass** es zwischen 0,08 und 3 Gew.-% an nativen entfetteten löslichen Serumproteinen im Verhältnis zum Gesamtgewicht des Milchprodukts enthält.

5. Mikrogeschäumtes Milchfrischprodukt gemäß einem der vorangehenden Ansprüche, **dadurch gekennzeichnet, dass** es 0,3 bis 5 Gew.-% mikrokristalline Cellulose im Verhältnis zum Gesamtgewicht des Milchprodukts enthält.

6. Mikrogeschäumtes Milchfrischprodukt gemäß einem der vorangehenden Ansprüche, **dadurch gekennzeichnet, dass** es keine Gelatine enthält.

7. Mikrogeschäumtes Milchfrischprodukt gemäß einem der vorangehenden Ansprüche, **dadurch gekennzeichnet, dass** es weitere Zutaten enthält, bevorzugt ausgewählt aus gezuckerten Sirupen, Sahne, Fruchtzubereitungen, bevorzugt ausgewählt aus Fruchtpulpe und Fruchtstücken, und Kakao.

8. Mikrogeschäumtes Milchfrischprodukt gemäß einem der vorangehenden Ansprüche, **dadurch gekennzeichnet, dass** das Milchprodukt 0 bis 15 Gew.-%, bevorzugt 0 bis 5 Gew.-% Fette im Verhältnis zum Gesamtgewicht des Milchprodukts enthält.

9. Verfahren zur Herstellung eines mikrogeschäumten Milchfrischprodukts gemäß einem der Ansprüche 1 bis 8, **dadurch gekennzeichnet, dass** es die folgenden aufeinanderfolgenden Schritte umfasst:

   (a) Herstellung eines Ausgangsprodukts auf Milchbasis, das native entfettete lösliche Serumproteine und mikrokristalline Cellulose umfasst;
   (b) Mikroaufschäumen dieses Ausgangsprodukts auf Milchbasis, bevorzugt mithilfe eines dynamischen Aufschäumers und
   (c) Gewinnen des mikrogeschäumten Milchfrischprodukts.

10. Verfahren zur Herstellung eines mikrogeschäumten Milchfrischprodukts gemäß Anspruch 9, **dadurch gekennzeichnet, dass** Schritt (a) aus dem Mischen eines Ausgangsprodukts auf Milchbasis mit einer schäumenden nichtgeschäumten wässrigen Lösung, die native entfettete lösliche Serumproteine, bevorzugt in Form von Isolaten, und mikrokristalliner Cellulose enthält, besteht.

11. Verfahren gemäß Anspruch 10, **dadurch gekennzeichnet, dass** das in Schritt (c) erhaltene mikrogeschäumte Milchfrischprodukt zwischen 0.3 und 3 Gew.-% mikrokristalline Cellulose im Verhältnis zum Gesamtgewicht des Milchprodukts enthält.

12. Verfahren gemäß einem der Ansprüche 10 oder 11, **dadurch gekennzeichnet, dass** die schäumende wässrige Lösung Zutaten ausgewählt aus gezuckerten Sirupen, Sahne, Fruchtzubereitungen oder Kakao enthält.

13. Verfahren gemäß einem der Ansprüche 9 bis 11, **dadurch gekennzeichnet, dass** es einen zusätzlichen Schritt (d) umfasst, in dem dem mikrogeschäumten Milchfrischprodukt eine Zutat ausgewählt aus gezuckerten Sirupen, Sahne, Fruchtzubereitungen oder Kakao hinzugefügt und mit dem mikrogeschäumten Milchfrischprodukt gemischt wird.

14. Verfahren gemäß einem der Ansprüche 9 bis 13, **dadurch gekennzeichnet, dass** es einen zusätzlichen Schritt (e) der Aufbereitung des mikrogeschäumten Milchfrischprodukts umfasst.

15. Verfahren gemäß einem der Ansprüche 10 bis 14, **dadurch gekennzeichnet, dass** es eine Vorstufe (α) der Herstellung der schäumenden wässrigen Lösung umfasst, wobei die Zutaten ohne Beimischung von Luft in Wasser gemischt werden, gefolgt von Ansäuerung, bevorzugt mit Zitronensäure, einer thermischen Behandlung und einer Homogenisierung des erhaltenen Gemischs.

16. Verfahren gemäß einem der Ansprüche 9 bis 15, **dadurch gekennzeichnet, dass** das Ausgangsprodukt auf Milchbasis fermentiert wird und dass die Fermentation vor dem Schritt des Mischens des Ausgangsprodukts auf Milchbasis und der schäumenden wässrigen Lösung oder vor dem Einbringen der nativen entfetteten löslichen Serumproteine im Herstellungsschritt (a) erfolgt.

**EP 1 947 956 B1**

**Documents brevets cités dans la description**

- WO 02060283 A
- WO 03053174 A
- EP 1284106 A